# EUROPEAN PATENT APPLICATION

(11) **EP 4 796 203 A1**
(43) Date of publication of application: **26.08.2026**
(21) Application number: 26153378.0
(22) Date of filing: 22.01.2026
(51) Int. Cl.: B01D 53/04, B01D 53/26, B01D 53/86

(54) **MIXED GAS SEPARATION DEVICE AND MIXED GAS SEPARATION METHOD**

(30) Priority: 20.02.2025 JP 2025025862
(71) Applicant: L'Air Liquide, Société Anonyme pour l'Etude et l'Exploitation des Procédés Georges Claude, 75007 Paris (FR)
(72) Inventor: Kikuchi, Takashi, Amagasaki, 660-0857 (JP); Kamezawa, Takashi, Amagasaki, 660-0857 (JP); Rashidov, Temir, Amagasaki, 660-0857 (JP)
(74) Representative: Air Liquide

(57) **Abstract**

[Problem] To separate a high purity gas from a mixed gas with high efficiency at low cost.

[Solution] A mixed gas separation device comprising: a compression unit that compresses a mixed gas containing a plurality of gases, including hydrogen; a hydrogen absorption unit comprising a hydrogen absorbing alloy configured to absorb hydrogen, wherein the hydrogen absorption unit causes the hydrogen absorbing alloy to absorb the hydrogen contained in the mixed gas compressed by the compression unit; an oxidation treatment unit that oxidizes a gas that has passed through the hydrogen absorption unit; and a gas storage unit that stores the gas following the oxidation by the oxidation treatment unit.

## Description

### [TECHNICAL FIELD]

The present invention relates to a mixed gas separation device and a mixed gas separation method.

### [BACKGROUND ART]

In recent years, natural hydrogen has been attracting attention as a green source of hydrogen. Natural hydrogen occurs in the ground and the sea bed, and is found in various units of the world. This type of natural hydrogen often occurs in the form of mixed gases with other gases such as helium and methane, and is therefore difficult to use.

An example of a method for using a mixed gas of hydrogen and helium involves using the mixed gas as-is as a fuel without separating hydrogen from helium if the amount of hydrogen is sufficiently high. In addition, if the amount of helium is sufficiently high, the hydrogen is removed by means of an oxidation reaction and the resulting gas is used as a helium source.

Furthermore, separating hydrogen or helium from a mixed gas has been considered in order to obtain high purity gases from the gas mixture. In general, methods for separating various high-purity gases from a mixed gas containing multiple types of gases include cryogenic separation, molecular sieving, and membrane separation.

### [PRIOR ART DOCUMENTS]

### [PATENT DOCUMENTS]

[Patent Document 1] Japanese Patent Application Publication No. H02-204302

### [SUMMARY OF INVENTION]

### [PROBLEM TO BE SOLVED BY THE INVENTION]

However, when separating gases with a high-purity from a mixture of hydrogen and other gases, there are problems of low separation efficiency and increased costs. For example, in the case of a mixture of hydrogen and helium, it is difficult to separate the hydrogen and helium using molecular sieves or membrane separation because both hydrogen and helium have very small molecular diameters. Even if it were possible to separate hydrogen and helium using molecular sieves or membrane separation, multiple separation stages would be required, increasing costs. Furthermore, because the liquefaction temperatures of both hydrogen and helium are very low (helium: -269°C, hydrogen: -253°C) and the freezing point of hydrogen is -259°C, these temperatures are too close for phase separation, making it difficult to separate hydrogen and helium using cryogenic separation involving rectification.

Separating hydrogen from helium in this way is difficult, but hydrogen can be used as an energy carrier, and helium is a noble gas and is therefore used in the form of a gas in, for example, leak tests and lasers. Therefore, it is desirable to recover both hydrogen and helium from mixed gases.

With the above in mind, the purpose of the present disclosure is to provide a mixed gas separation device and a mixed gas separation method, with which high purity gases can be separated from a mixed gas with high efficiency at low cost.

### [SOLUTION TO PROBLEM]

According to one aspect of the present disclosure,the invention concerns a mixed gas separation device comprising: a compression unit that compresses a mixed gas containing a plurality of gases, including hydrogen;
a hydrogen absorption unit comprising a hydrogen absorbing alloy configured to absorb hydrogen, wherein the hydrogen absorption unit causes the hydrogen absorbing alloy to absorb the hydrogen contained in the mixed gas compressed by the compression unit;
an oxidation treatment unit that oxidizes a gas that has passed through the hydrogen absorption unit; and a gas storage unit that stores the gas following the oxidation by the oxidation treatment unit.

In an embodiment, the mixed gas separation device further comprises: a heating unit that heats the hydrogen absorbing alloy in the hydrogen absorption unit; and a hydrogen storage unit that stores hydrogen released from the hydrogen absorbing alloy heated by the heating unit.

In an embodiment, the heating unit heats the hydrogen absorbing alloy after the gas is stored by the gas storage unit and an inside of the mixed gas separation device is purged.

In an embodiment, the heating unit heats the hydrogen absorbing alloy provided in the hydrogen absorption unit after gas passes through the hydrogen absorption unit and the hydrogen absorption unit is purged.

The purge of the device or of the absorption unit may comprise evacuating the device or the absorption unit and obtaining a vacuum in the device or in the absorption unit. In this case, the devices comprises a component to generate the vacuum, for example a vacuum pump.

The purge of the device or of the absorption unit may comprise flushing the device or the absorption unit with a stream of purified hydrogen. In this case, the flush stream may be provided by a source of purified hydrogen or by the hydrogen storage unit.

In an embodiment, the hydrogen absorption unit comprises a plurality of hydrogen absorbing alloys provided in multiple stages, and the mixed gas is passed sequentially around the plurality of hydrogen absorbing alloys.

In an embodiment, the mixed gas separation device further comprises: a drying treatment unit that removes water generated as a result of hydrogen being oxidized by the oxidation treatment unit.

In an embodiment, the compression unit
compresses a mixed gas in which hydrogen and helium are mixed.

According to another aspect of the present disclosure, the invention also concerns a mixed gas separation method, comprising: compressing a mixed gas in which a plurality of gases, including hydrogen, are mixed; causing hydrogen contained in the mixed gas to be absorbed into a hydrogen absorbing alloy by passing the compressed mixed gas around the hydrogen absorbing alloy that absorbs hydrogen;
oxidizing a gas that has passed around the hydrogen absorbing alloy; and
storing the gas following the oxidation.

### [EFFECTS OF THE INVENTION]

According to the present disclosure, it is possible to extract a gas with high purity from a mixed gas with high efficiency at low cost.

### [BRIEF DESCRIPTION OF DRAWINGS]

[FIG. 1] FIG. 1 is a block diagram that shows the configuration of a mixed gas separation device according to one embodiment.
[FIG. 2] FIG. 2 is a diagram that explains the structure of a hydrogen absorption unit.
[FIG. 3] FIG. 3 is a flow chart that shows a mixed gas separation method according to one embodiment.

### [DESCRIPTION OF EMBODIMENTS]

An embodiment according to the present invention will now be explained with reference to the accompanying drawings. The embodiment described below is merely an example, and it should not be interpreted that the invention is limited by the wording in this embodiment.

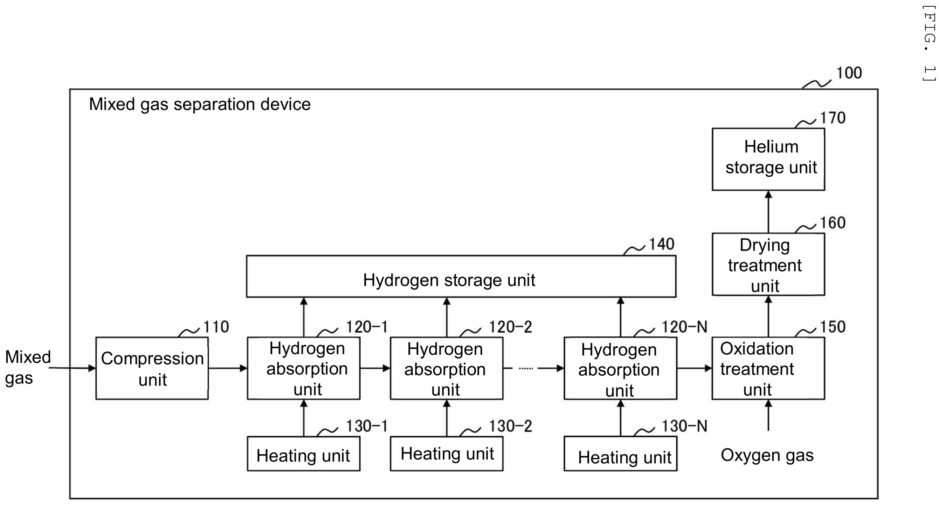

FIG. 1 is a diagram that shows the configuration of a mixed gas separation device 100 according to one embodiment. This mixed gas separation device 100 separates hydrogen and helium from hydrogen - helium gas mixture but gas mixture targeted by the present disclosure is not limited to hydrogen -helium gas mixture. For example, hydrogen -methane gas mixture can be separated by a mixed gas separation device having a similar configuration to the mixed gas separation device 100 shown in FIG. 1.

The mixed gas separation device 100 shown in FIG. 1 comprises: a compression unit 110; hydrogen absorption units 120-1 to 120-N (N is an integer of 1 or more); heating units 130-1 to 130-N; a hydrogen storage unit 140; an oxidation treatment unit 150; a drying treatment unit 160; and a helium storage unit 170.

The compression unit 110 comprises a compressor that compresses a mixed gas introduced into the mixed gas separation device 100, and discharges the mixed gas, which has been compressed to a high pressure, to the hydrogen absorption unit 120-1.

The hydrogen absorption units 120-1 to 120-N each comprise a hydrogen absorbing alloy and absorb hydrogen contained in the mixed gas. That is, as a result of the mixed gas passing around the hydrogen absorbing alloys in the hydrogen absorption units 120-1 to 120-N, hydrogen contained in the mixed gas is absorbed in the hydrogen absorbing alloys. In addition, the hydrogen absorption units 120-1 to 120-(N-1) discharge the mixed gas, which has passed around the hydrogen absorbing alloys, to subsequent hydrogen absorption units 120-2 to 120-N. In addition, the hydrogen absorption unit 120-N delivers an off-gas, which has passed around the hydrogen absorbing alloy, to the oxidation treatment unit 150. The number N of hydrogen absorption units 120-1 to 120-N is decided, as appropriate, in accordance with the hydrogen concentration in the mixed gas introduced into the mixed gas separation device 100 and the desired purity of hydrogen or helium to be obtained by the separation.

Furthermore, after absorbing hydrogen in the hydrogen absorbing alloys, the hydrogen absorption units 120-1 to 120-N deliver the hydrogen released from the hydrogen absorbing alloys to the hydrogen storage unit 140 when heated by the corresponding heating units 130-1 to 130-N. That is, because the hydrogen absorbing alloys release absorbed hydrogen molecules when heated, the hydrogen absorption units 120-1 to 120-N deliver the hydrogen released from the hydrogen absorbing alloys to the hydrogen storage unit 140.

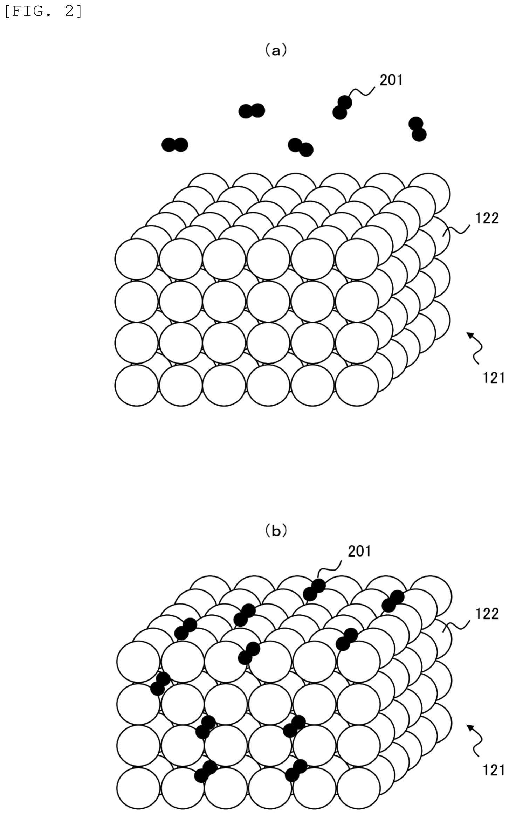

As shown in FIG. 2(a), for example, the hydrogen absorption units 120-1 to 120-N comprise a hydrogen absorbing alloy 121 formed by metal atoms 122 being arranged in a lattice-like pattern. When this hydrogen absorbing alloy 121 comes into contact with the high pressure mixed gas, hydrogen molecules 201 contained in the mixed gas combine with the metal atoms 122 to form a metal hydride such as that shown in FIG. 2(b), for example. In addition, when heated, the hydrogen absorbing alloy 121, which has formed a metal hydride as shown in FIG. 2(b), releases absorbed hydrogen molecules 201.

The heating units 130-1 to 130-N heat the corresponding hydrogen absorption units 120-1 to 120-N. Specifically, the heating units 130-1 to 130-N heat the respective hydrogen absorption units 120-1 to 120-N, thereby releasing hydrogen from the hydrogen absorbing alloys after the mixed gas has passed through the hydrogen absorption units 120-1 to 120-N, the off-gas has been forwarded to the oxidation treatment unit 150, and the mixed gas and the off-gas have been purged. The heating temperature for releasing hydrogen absorbed by the hydrogen absorbing alloys varies depending on the type of metal atoms that constitutes the hydrogen absorbing alloys, but considering that flammable hydrogen is released, it is preferable to use a hydrogen absorbing alloy that releases hydrogen at a temperature of, for example, lower than 100°C.Therefore, the heating units 130-1 to 130-N heat the respective hydrogen absorption units 120-1 to 120-N to a heating temperature of, for example, 150°C or lower, at which the hydrogen absorbing alloys release hydrogen.

The hydrogen storage unit 140 stores hydrogen released from the hydrogen absorption units 120-1 to 120-N. That is, the hydrogen storage unit 140 stores hydrogen released when the hydrogen absorbing alloys are heated. Hydrogen stored by the hydrogen storage unit 140 is high purity hydrogen from which helium in the mixed gas has been separated. Hydrogen stored by the hydrogen storage unit 140 can be used as-is as hydrogen energy, but can also be used as high purity hydrogen after being further purified.

The oxidation treatment unit 150 comprises an oxidation catalyst and, when an off-gas is forwarded from the hydrogen absorption unit 120-N following hydrogen absorption, oxygen gas is introduced and the off-gas is oxidized. Specifically, because a helium-rich off-gas is forwarded from the hydrogen absorption unit 120-N, the oxidation treatment unit 150 oxidizes hydrogen remaining in the off-gas and converts this hydrogen into water, thereby removing the remaining hydrogen in the off-gas. In this way, the off-gas becomes high purity helium gas.

The drying treatment unit 160 comprises a drying agent, absorbs water in the off-gas that has been oxidized by the oxidation treatment unit 150, and removes water generated through oxidation of hydrogen. That is, since the off-gas contains moisture due to the oxidation treatment in the oxidation treatment unit 150, the drying treatment unit 160 removes moisture, which is an impurities, from the off-gas in the form of helium gas.

The helium storage unit 170 stores helium gas that has been dried by the drying treatment unit 160. That is, the helium storage unit 170 stores high purity helium gas from which hydrogen has been separated. Helium gas stored in the helium storage unit 170 can be used as-is in the form of a gas for a leak test, a laser, and so on, but can also be liquefied by being cooled to a temperature close to absolute zero and used in an extremely low temperature region.

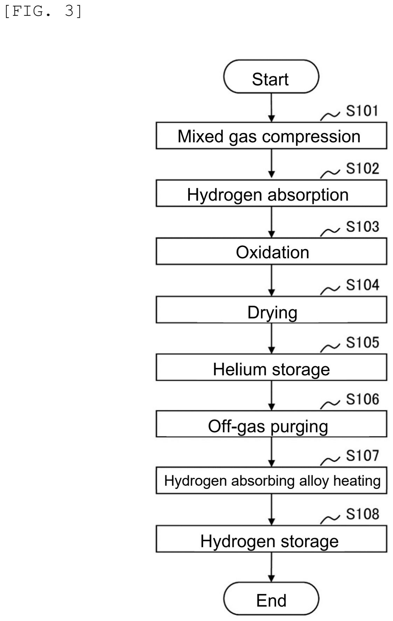

Next, a mixed gas separation method that uses the mixed gas separation device 100 constituted in the manner described above will be explained with reference to the flow chart shown in FIG. 3.

When a mixed gas is introduced into the mixed gas separation device 100, the mixed gas is compressed by the compression unit 110 (step S101). The mixed gas is a mixed gas of, for example, hydrogen and helium, and may be extracted from the ground or the sea bed as natural hydrogen, which is also known as white hydrogen or gold hydrogen. In addition, the mixed gas may be exhaust gas produced by, for example, factories and laboratories.

The mixed gas that has been compressed to a high pressure is sequentially introduced into the hydrogen absorption units 120-1 to 120-N and passes around the hydrogen absorbing alloys in the hydrogen absorption units 120-1 to 120-N, and hydrogen in the mixed gas is thereby absorbed by the hydrogen absorbing alloys (step S102). In this way, the mixed gas that has passed through the hydrogen absorption units 120-1 to 120-N becomes a helium-rich off-gas. In a case where multiple hydrogen absorption units 120-1 to 120-N are provided (that is, in a case where N is 2 or more), the amount of hydrogen remaining in the mixed gas decreases as the process progresses towards latter stages of hydrogen absorption units 120-1 to 120-N, and a helium-rich off-gas is obtained.

In addition, when the helium-enriched off-gas is forwarded from the final hydrogen absorption unit 120-N to the oxidation treatment unit 150, the off-gas is oxidized by the oxidation treatment unit 150 (step S103). That is, due to the oxidative action of the oxidation catalyst, hydrogen remaining in the helium-rich off-gas is oxidized to produce water, and water-containing high purity helium gas is produced.

The water-containing off-gas is forwarded to the drying treatment unit 160, and is dried by the drying treatment unit 160 (step S104). That is, water contained in the off-gas is removed by the drying, in which a drying agent is used, and high purity helium gas is produced. The thus produced high purity helium gas is stored by the helium storage unit 170 (step S105). In this way, high purity helium can be recovered from the mixed gas.

Next, the mixed gas and off-gas remaining inside the mixed gas separation device 100 are purged (step S106), and hydrogen absorbing alloys in the hydrogen absorption units 120-1 to 120-N are heated by the corresponding heating units 130-1 to 130-N (step S107). In this way, hydrogen absorbed by the hydrogen absorbing alloys is released, and the released hydrogen is stored by the hydrogen storage unit 140 (step S108). Because hydrogen released from the hydrogen absorbing alloys is high purity hydrogen from which helium has been separated, high purity hydrogen can be recovered from the mixed gas.

Moreover, in this case, the mixed gas passes through all of the hydrogen absorption units 120-1 to 120-N, the mixed gas and the off-gas are then purged, and the hydrogen absorption units 120-1 to 120-N are heated by the heating units 130-1 to 130-N, but the timing of the purging and heating is not limited to this. For example, when the mixed gas passes through the hydrogen absorption units 120-1 to 120-N, the hydrogen absorption units 120-1 to 120-N through which the mixed gas has passed may be sequentially purged, and the hydrogen absorbing alloys may be sequentially heated in the hydrogen absorption units 120-1 to 120-N in which purging is complete.

According to the present embodiment, hydrogen in the mixed gas is absorbed by the hydrogen absorbing alloys, a helium-rich off-gas is oxidized and dried following the hydrogen absorption, thereby removing residual hydrogen, and the thus obtained high purity helium is stored, as explained above. Next, the hydrogen absorbing alloys are heated to release absorbed hydrogen, and the thus obtained high purity hydrogen is stored. Therefore, hydrogen and helium can be separated from a mixed gas of hydrogen and helium using simple facilities, and high purity gases can be separated from a mixed gas with high efficiency at low cost.

In the embodiment described above, the mixed gas introduced into the mixed gas separation device 100 is compressed by the compression unit 110, but a treatment for removing impurities dissolved in the mixed gas, such as filtering or the like, may be carried out as a pretreatment prior to compression.

In addition, the hydrogen storage unit 140 and the helium storage unit 170 may store hydrogen and helium, respectively, in the form of gases, but may also store hydrogen and helium in the form of liquids. Furthermore, before being stored in the hydrogen storage unit 140 and the helium storage unit 170, the hydrogen and helium may be purified using a variety of methods and then stored.

### [Reference Symbols]

110: Compression unit
120-1 to 120-N: Hydrogen absorption units
130-1 to 130-N: Heating units
140: Hydrogen storage unit
150: Oxidation treatment unit
160: Drying treatment unit
170: Helium storage unit

## Claims

1. A mixed gas separation device comprising:
a compression unit that compresses a mixed gas containing a plurality of gases, including hydrogen;
a hydrogen absorption unit comprising a hydrogen absorbing alloy configured to absorb hydrogen, wherein the hydrogen absorption unit causes the hydrogen absorbing alloy to absorb the hydrogen contained in the mixed gas compressed by the compression unit;
an oxidation treatment unit that oxidizes a gas that has passed through the hydrogen absorption unit; and
a gas storage unit that stores the gas following the oxidation by the oxidation treatment unit.

2. The mixed gas separation device according to claim 1, further comprising:
a heating unit that heats the hydrogen absorbing alloy in the hydrogen absorption unit; and
a hydrogen storage unit that stores hydrogen released from the hydrogen absorbing alloy heated by the heating unit.

3. The mixed gas separation device according to claim 2, wherein the heating unit heats the hydrogen absorbing alloy after the gas is stored by the gas storage unit and an inside of the mixed gas separation device is purged.

4. The mixed gas separation device according to claim 2, wherein the heating unit heats the hydrogen absorbing alloy provided in the hydrogen absorption unit after gas passes through the hydrogen absorption unit and the hydrogen absorption unit is purged.

5. The mixed gas separation device according to claim 1, wherein the hydrogen absorption unit comprises a plurality of hydrogen absorbing alloys provided in multiple stages, and the mixed gas is passed sequentially around the plurality of hydrogen absorbing alloys.

6. The mixed gas separation device according to claim 1, further comprising a drying treatment unit that removes water generated as a result of hydrogen being oxidized by the oxidation treatment unit.

7. The mixed gas separation device according to claim 1, wherein the compression unit compresses a mixed gas in which hydrogen and helium are mixed.

8. A mixed gas separation method, comprising:
compressing a mixed gas in which a plurality of gases, including hydrogen, are mixed;
causing hydrogen contained in the mixed gas to be absorbed into a hydrogen absorbing alloy by passing the compressed mixed gas around the hydrogen absorbing alloy that absorbs hydrogen;
oxidizing a gas that has passed around the hydrogen absorbing alloy; and
storing the gas following the oxidation.
